# EUROPEAN PATENT SPECIFICATION

(11) **EP 1 804 317 B1**
(45) Date of publication and mention of the grant of the patent: **16.04.2014**
(21) Application number: 06126991.6
(22) Date of filing: 22.12.2006
(51) Int. Cl.: H01M 2/04, H01M 6/50, H01M 10/42, H01M 10/44

(54) **Battery cap assembly**
Batteriekappenanordnung
Assemblage d'un bouchon de batterie

(30) Priority: 29.12.2005 KR 20050134561
(43) Date of publication of application: 04.07.2007
(73) Proprietor: Samsung SDI Co., Ltd., Yongin-si, Gyeonggi-do (KR)
(72) Inventor: Jeon, Byeongdeok, Gyeonggi-do (KR)
(74) Representative: Grey, Ian Michael

(56) References cited:
- EP-A- 0 810 677
- GB-A- 2 330 234
- JP-A- 9 147 822
- US-A- 3 706 617
- US-B1- 6 207 319
- US-B1- 6 537 693

## Description

The present invention relates to a battery cap assembly. More particularly, the present invention relates to a battery cap assembly having an upper cap part, a safety apparatus and protrusions on a lower surface of the upper cap part to engage the safety apparatus, as well as a battery having the same and a method of making the same.

Batteries are manufactured in a wide variety of forms and may employ any of a number of electrochemical technologies. Batteries may be generally classified as single-use, or primary, batteries and rechargeable, or secondary, batteries. Recently, rechargeable battery technology has been rapidly developed, and the advantages of rechargeability, low weight, and large capacity have led to increasing use of rechargeable batteries such as Ni-MH and Li-ion batteries.

Battery forms may include, e.g., can type and pouch type batteries used for lithium rechargeable batteries, with the type being classified based on the shape of the container that houses the electrode assembly. Can type batteries may be classified into polygon, or prismatic, type rechargeable batteries and cylindrical type rechargeable batteries. The polygon type rechargeable battery may be formed by molding a thin container into a rectangular parallelepiped shape, or a shape in which edges of the side walls of the rectangular parallelepiped are curved. The cylindrical type rechargeable battery is widely used for electronic and electrical devices that require large capacity, often with multiple batteries coupled to each other to form a battery pack.

Advances in battery development have let to the inclusion of multiple components in some batteries, e.g., the inclusion of safety devices within the battery container. However, these developments also add complexity to the batteries, which increases the likelihood of reliability issues and battery failure.

The present invention is therefore directed to a cap assembly, a battery having the same, and method of making the same, which substantially overcome one or more of the problems due to the limitations and disadvantages of the related art.

It is therefore a feature of an embodiment of the present invention to provide a cap assembly for a battery in which an upper part of the cap assembly is configured to be firmly connected to an underlying part, which may prevent an increase in contact resistance between the parts.

It is therefore another feature of an embodiment of the present invention to provide a cap assembly for a battery in which an upper part of the cap assembly has at least one protrusion on a lower surface thereof to engage an underlying safety apparatus.

It is known from US 6537693 to provide a battery cap assembly, comprising an upper cap part, and an underlying safety apparatus, protrusions on a lower surface of the upper cap part configured to engage the upper surface of the safety apparatus when the battery cap assembly is placed in an opening of a battery housing and an edge of the battery housing is deformed to retain the battery cap assembly in the battery housing, wherein a hardness of the protrusions is greater than a hardness of a facing surface of the safety apparatus.

A battery cap assembly is also known from EP 0810666, JP 09147822 and US 3706617.

A battery cap assembly according to the present invention is characterised in that he protrusions have a height of about 5 µm to about 200 µm and are embedded in the upper surface of the safety apparatus when the edge of the battery housing is deformed.

The protrusions may be media blasted protrusions. The protrusions may be arranged in a predetermined pattern, and the protrusions may be a mold of the first cap part. A hardness of the protrusions may be greater than a hardness of a facing surface of the safety apparatus. The protrusions may include at least one of plated steel, stainless steel, and nickel. The facing surface of the safety apparatus may include at least one of aluminum and aluminum alloy.

The first cap part and the safety apparatus may be welded together. The safety apparatus may include a safety device that may be configured to be transformed by an internal battery pressure that exceeds a predetermined pressure, the safety device including a central protrusion that projects from a lower surface of the safety device, and a current intercepting unit that may operate by the transformation of the safety device, wherein the protrusions may contact a surface of the safety device. The safety device may be configured to release the internal battery pressure from a lower surface of the safety device to an upper surface of the safety device when the internal battery pressure exceeds the predetermined pressure.

At least one of the above and other features and advantages of the present invention may also be realized by providing a battery, including a battery housing defining a cavity and having an opening, an electrode assembly disposed within the cavity, and a cap assembly provided in the opening and electrically coupled with an electrode of the electrode assembly, wherein the cap assembly includes a first cap part; and a safety apparatus disposed between the first cap part and the electrode, wherein the first cap part includes protrusions on a lower surface thereof, the protrusions configured to engage the safety apparatus, and the safety apparatus electrically couples the first cap part to the electrode. The protrusions of the first cap part have a height of about 5 µm to about 200 µm. The battery may be a rechargeable battery.

At least one of the above and other features and advantages of the present invention may further be realized by providing a method of making a battery, including forming a first cap part, the first cap part including protrusions on a lower surface thereof, placing the upper cap part and an underlying safety apparatus in an opening of a housing of a battery, and deforming an edge of the battery housing adjacent to the opening to retain the first cap part and the safety apparatus in the opening with the protrusions on the lower surface of the upper cap part in engagement with an upper surface of the safety apparatus, the method including the step of selecting a first material for the protrusions in the upper cap part and a second material for the upper surface of the safety apparatus, the first material being harder than the second material, wherein a method of making a battery, comprising forming an upper cap part together with protrusions on a lower surface thereof, placing the upper cap part and an underlying safety apparatus in an opening of a housing of a battery; and deforming an edge of the battery housing adjacent to the opening to retain the first cap part and the safety apparatus in the opening with the protrusions on the lower surface of the upper cap part in engagement with an upper surface of the safety apparatus, the method including the step of selecting a first material for the protrusions in the upper cap part and a second material for the upper surface of the safety apparatus, the first material being harder than the second material, wherein the method includes the step of forming the protrusions so that they have a height of about 5 µm to about 200 µm and are become embedded in the upper surface of the safety apparatus when the edge of the battery housing is deformed.

Forming the first cap part may include media blasting the lower surface to form the protrusions. Forming the first cap part may include molding the protrusions into the first cap part. The protrusions may be formed of a first material and a surface of the safety apparatus that faces the protrusions may be formed of a second material, the first material being harder than the second material. Deforming the edge of the battery housing may press the protrusions against the safety apparatus.

The above and other features and advantages of the present invention will become more apparent to those of ordinary skill in the art by describing in detail exemplary embodiments thereof with reference to the attached drawings, in which:
Figure 1 illustrates a partial sectional view of a cap assembly and battery according to an embodiment of the present invention;
Figure 2A illustrates a plan view of a safety apparatus according to any embodiment of the present invention;
Figure 2B illustrates a bottom perspective view of the safety apparatus of Figure 2A;
Figure 2C illustrates a bottom view of the safety apparatus of Figure 2A;
Figure 3A illustrates sectional and enlarged view of an upper cap part of a cap assembly according to an embodiment of the present invention;
Figure 3B illustrates plan and enlarged view of an upper cap part of a cap assembly according to an embodiment of the present invention; and
Figures 4A-4C illustrate bottom and perspective views of an upper cap part of a cap assembly according to embodiments of the present invention.

The present invention will now be described more fully hereinafter with reference to the accompanying drawings, in which exemplary embodiments of the invention are illustrated. The invention may, however, be embodied in different forms and should not be construed as limited to the embodiments set forth herein. Rather, these embodiments are provided so that this disclosure will be thorough and complete, and will fully convey the scope of the invention to those skilled in the art.

In the figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

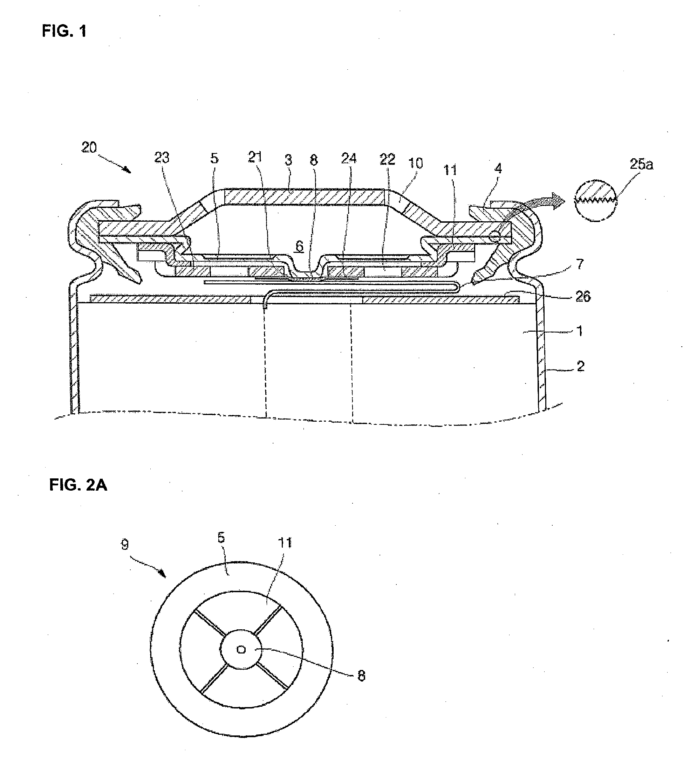

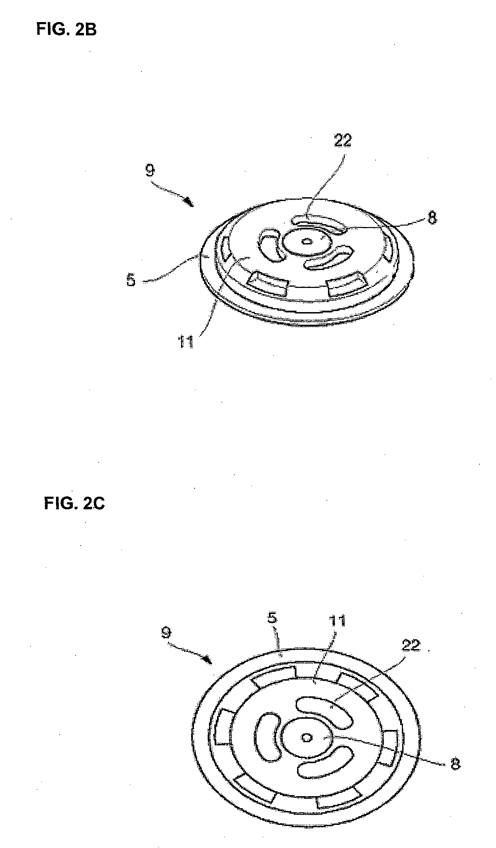

Hereinafter, embodiments of the present invention will be described in detail with reference to FIGS. 1-4C. FIG. 1 illustrates a partial sectional view of a cap assembly and battery according to an embodiment of the present invention, FIG. 2A illustrates a plan view of a safety apparatus according to an embodiment of the present invention; FIG. 2B illustrates a bottom perspective view of the safety apparatus of FIG. 2A, and FIG. 2C illustrates a bottom view of the safety apparatus of FIG. 2A.

Referring to FIGS. 1 and 2A-2C, a battery according to an embodiment of the present invention may include a cap assembly 20 having an upper cap part 3 and an underlying safety apparatus 9. The upper cap part 3 may have a plurality of protrusions 25a on a lower surface thereof, and the protrusions 25a may be configured to engage the safety apparatus 9, which may improve reliability of the battery without requiring significant changes to the battery structure or the manufacturing process. The cap assembly 20 may be implemented in a rechargeable battery in order to increase the life of the rechargeable battery, e.g., when the battery is used in a high-vibration application such as a power tool.

The battery may include an electrode assembly 1 having a winding of a positive electrode and a negative electrode with a separator interposed therebetween (details not shown). The electrode assembly 1 may include, e.g., metal foil current collectors that are coated with an active material slurry.

The electrode assembly 1 may be accommodated in a can 2, which may be connected to the negative electrode. The cap assembly 20 may be connected to the positive electrode, with the cap assembly 20 and the can 2 insulated from each other by a gasket 4 interposed therebetween.

An insulating plate 26 may be disposed on the electrode assembly 1 below the cap assembly 20. The can 2 may have a bead formed therein near an upper edge, the bead configured to retain the cap assembly 20. An electrolyte may be injected into the can 2, and the cap assembly 20 may close the can 2. Upon final assembly, the end of the opening of the can 2 may be sealed, e.g., by crimping or rolling the end of the opening. The upper cap part 3 may have at least one protrusion 25a formed on the lower surface thereof that engages the safety apparatus 9. The safety apparatus 9 may be configured to prevent dangerous conditions within the battery in the event of, e.g., overcharge or short circuit conditions, high pressure or high temperature conditions, etc. The safety apparatus 9 may form part of the internal electrical connections of the battery, such that current passes through the safety apparatus 9 to the upper cap part 3.

The upper cap part 3 may include one or more holes 10, which may be provided in order to discharge gases from the battery. Controlled discharge of the gases may be provided by a safety device 5 in the safety apparatus 9, the safety device 5 being disposed below the upper cap part 3 and electrically connected to the upper cap part 3. The gasket 4 may seal flanged edges of the safety device 5 to internal sides of the can 2, providing an air-tight seal during normal operation of the battery.

The safety device 5 may have a protrusion 8 in the center thereof that projects toward the electrode assembly 1. The safety apparatus 9 may also include a current intercepting unit 6 that operates by transformation of the safety device 5. The safety device 5 may be, e.g., a metal plate configured to be transformed if an internal pressure of the battery exceeds a predetermined amount. An insulating plate 11, e.g., a plastic plate, may be provided below the safety device 5.

A disk 23 may be provided below the insulating plate 11. The disk 23 may have sufficient strength to remain planar and may have a hole 21 formed in a center thereof, the hole 21 disposed and sized to accommodate the protrusion 8 of the safety device 5 such that the protrusion 8 extends through the disk 23. The disk 23 may also have vent holes 22 therein, in order to expose the safety device 5 to any pressure that develops within the battery. The insulating plate 11 may be interposed between the disk 23 and the safety device 5 and may insulate the disk 23 and the safety device 5 from each other. A plate 24, e.g., a thin metal plate, may cover the hole 21 in the disk 23. The plate 24 may be welded to the disk 23. The plate 24 may be electrically connected to a negative electrode tab 7 from the electrode assembly 1.

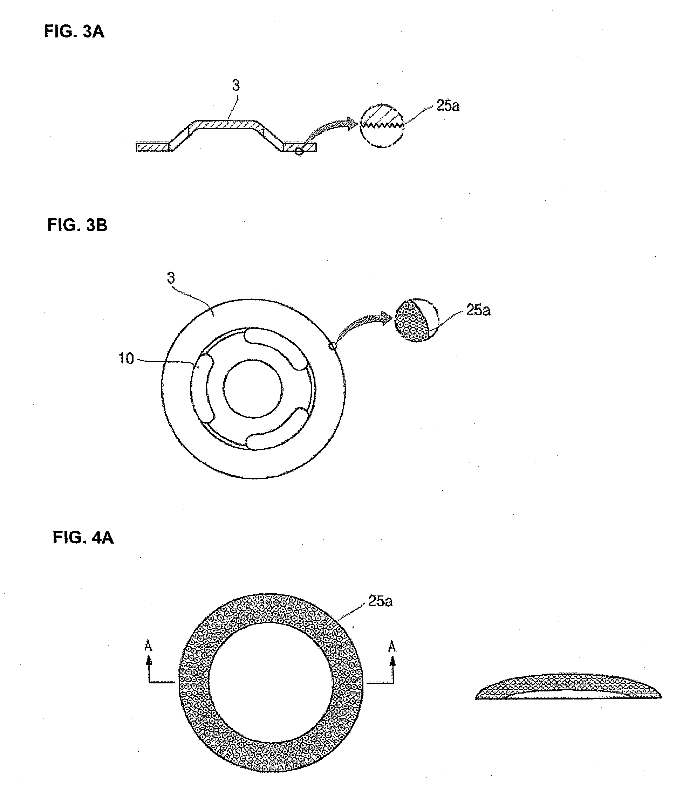

As noted above, the battery may be sealed by a crimping operation. Referring to FIGS. 3A and 3B, when the end of the opening of the can 2 is crimped, the protrusions 25a formed on the lower surface of the upper cap part 3 may be pressed against the upper surface of the safety device 5 in order to engage the upper surface. Thus, intimate contact between the upper cap part 3 and the safety device 5 may be achieved. This may help avoid increases in the internal electrical resistance of the battery caused by vibration, etc., that would otherwise disrupt the electrical connection between the upper cap part 3 and the safety device 5.

The upper surface of the safety device 5 may be formed of a conductive material and has a lower hardness that the protrusions 25a on the upper cap part 3, such that the protrusions 25a may embed themselves into the upper surface of the safety device 5. The protrusions 25a may likewise be conductive and may be formed of the same material as the remainder of the upper cap part 3. For example, the safety device 5 may be formed of aluminum metal, and the protrusions 25a and the upper cap part 3 may be formed of a harder metal. The upper cap part 3 may be initially formed or subsequently processed so that the protrusions 25a project from the lower surface thereof.

Forming the upper cap part 3 in this manner may help maintain good electrical contact between the upper cap part 3 and the safety device 5 without requiring significant changes to the manufacturing process. Therefore, it may be possible to tightly seal the rechargeable battery, increase the ability of the battery components to tolerate vibration, increase the ability of the battery to withstand internal pressure, and maintain a low contact resistance between the upper part of the cap assembly 3 and the safety device 5. In particular, it may help prevent the electrical coupling of the cap assembly from deteriorating when the battery is used for an apparatus that continuously vibrates, e.g. an electrically driven tool, thereby avoiding an undue increase in internal resistance of the battery.

According to an embodiment of the present invention, the protrusions 25a on the lower surface of the upper cap part 3 may be formed in any suitable shape, so long as the lower surface of the upper cap 3 engages the safety device 5, e.g. to be embedded into the upper surface of the safety device 5, when the lower surface of the upper cap part 3 presses the upper surface of the safety device 5. The protrusions formed on the lower surface of the upper cap part 3 have a height of about 5 µm to about 200 µm. In an implementation, the protrusions 25a may be sharp, so as to more easily embed into the upper surface of the safety device 5.

According to an embodiment of the present invention, protrusions 25a formed on the lower surface of the upper cap part 3 may be formed by molding the upper cap part 3, e.g., using casting, stamping, etc., and then media blasting, e.g., sand blasting, etc., the lower surface of the upper cap part 3, so as to make the lower surface of the upper cap part 3 rough. For example, after manufacturing the upper cap part 3 using a mold, a media blast process may be performed to form the protrusions 25a. In the media blast process, particles such as sand grains may be made to collide with the lower surface of the upper cap part 3, which is thereby processed to make the surface rough

According to another embodiment of the present invention, protrusions 25a may be formed in the lower surface of the upper cap part 3 directly in the molding process, e.g., by casting, stamping, etc. to shape the upper cap part 3 and the protrusions 25a at the same time, in which case it may be possible to more precisely establish the desired shape, size, and number of protrusions 25a, and to make the shape of the protrusions 25a uniform. Thus, as illustrated in Figures 4A-4C, it may be possible to make the protrusions 25a have various shapes and/or patterns. Therefore, it may be possible to process the lower surface of the upper cap part 3 to exhibit characteristics that are particularly suitable for the intended application, e.g., a rechargeable battery for use in a power tool.

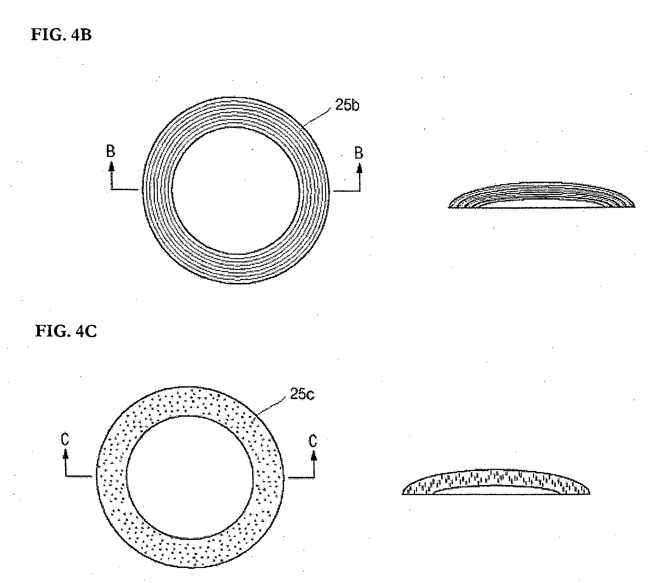

FIGS. 4A-4C are bottom views of upper cap parts 3 according to embodiments of the present invention, alongside partial perspective views illustrating sections taken along the lines A-A, B-B, and C-C, respectively. Various sharp protrusions 25a, 25b, and 25c may be obtained by processing the lower surface of the upper cap part 3 as illustrated in FIGS. 4A -4C. Referring to FIG. 4A, the protrusions 25a may be discrete protrusions formed in a predetermined arrangement, e.g., in radially-arranged rows. Referring to FIG. 4B, the protrusions 25b may be continuous protrusions formed in a predetermined arrangement, e.g., in concentric circles. Referring to FIG. 4C, the protrusions 25c may be discrete protrusions formed in a more or less random pattern.
According to an embodiment of the present invention, in order to improve the coupling force between the upper cap part 3 and the safety apparatus 9, the lower surface of the upper cap part 3 and the upper surface of the safety apparatus 9 may also be coupled with each other by welding the lower surface of the upper cap part 3 and the upper surface of the safety apparatus 9 to each other.

The vibration tolerance of a battery having a structure as described above may be established using a drum test, which is a vibration test that may be performed on a rechargeable battery by putting the battery in a drum and rotating the drum for 30 minutes at a speed of 66 rpm, in order to determine the degree of the increase in the internal resistance of the battery. An internal resistance increase of 10% or more may be associated with a defective rechargeable battery.

In a battery according to an embodiment of the present invention, it may be possible to prevent the coupling force of the cap assembly from deteriorating when the battery is used for a high vibration application such as an electric tool. Accordingly, it may be possible to prevent the internal resistance of the battery from increasing, and thus prevent significant reductions in the life of the battery.

Exemplary embodiments of the present invention have been disclosed herein, and although specific terms are employed, they are used and are to be interpreted in a generic and descriptive sense only and not for purpose of limitation.

## Claims

1. A battery cap assembly, comprising an upper cap part (3) and an underlying safety apparatus (9), protrusions (25a) on a lower surface of the upper cap part (3) configured to engage the upper surface of the safety apparatus (9) when the battery cap assembly is placed in an opening of a battery housing and an edge of the battery housing is deformed to retain the battery cap assembly in the battery housing, wherein a hardness of the protrusions (25a) is greater than a hardness of a facing surface of the safety apparatus (9), **characterised in that** the protrusions (25a) have a height of about 5 µm to about 200 µm and are embedded in the upper surface of the safety apparatus (9) when the edge of the battery housing is deformed:

2. A battery cap assembly according to claim 1, wherein the protrusions (25a) are serrations on the surface of the first cap part (3a).

3. The battery cap assembly as claimed in claim 1, wherein the protrusions (25a) are media blasted protrusions.

4. The battery cap assembly as claimed in claim 1 or claim 2, wherein the protrusions (25a) are arranged in a predetermined pattern.

5. The battery cap assembly of claim 1 or claim 2, wherein the protrusions (25a) are molded together with the first cap part (3).

6. The battery cap assembly as claimed in any preceding claim, wherein the protrusions (25a) comprise at least one of plated steel, stainless steel, and nickel.

7. The battery cap assembly as claimed in any preceding claim, wherein the facing surface of the safety apparatus (9) comprises at least one of aluminum and aluminum alloy.

8. The battery cap assembly as claimed in any preceding claim, wherein the first cap part (3) and the safety apparatus (9) are welded together.

9. The battery cap assembly as claimed in any preceding claim, wherein the safety apparatus (9) comprises a safety device (5) that is configured to be transformed by an internal battery pressure that exceeds a predetermined pressure, the safety device (5) including a central protrusion (8) that projects from a lower surface of the safety device; and a current intercepting unit (6) that operates by the transformation of the safety device (5), wherein the protrusions (25a) contact a surface of the safety device.

10. The battery cap assembly as claimed in claim 9, wherein the safety device (5) is configured to release internal battery pressure from a lower surface of the safety device (5) to an upper surface of the safety device (5) when said internal battery pressure exceeds the predetermined pressure.

11. A battery comprising the battery cap assembly according to any preceding claim and, a battery housing defining a cavity and having an opening, an electrode assembly (1) disposed within the cavity, the battery cap assembly being provided in the opening and electrically coupled with an electrode of the electrode assembly (1), with the safety apparatus (9) electrically coupling the first cap part (3) to the electrode.

12. The battery as claimed in claim 11, wherein the battery is a rechargeable battery.

13. A method of making a battery, comprising forming an upper cap part (3) together with protrusions (25a) on a lower surface thereof, placing the upper cap part (3) and an underlying safety apparatus (9) in an opening of a housing of a battery; and deforming an edge of the battery housing adjacent to the opening to retain the first cap part (3) and the safety apparatus (9) in the opening with the protrusions (25a) on the lower surface of the upper cap part (3) in engagement with an upper surface of the safety apparatus (9), the method including the step of selecting a first material for the protrusions in the upper cap part (3) and a second material for the upper surface of the safety apparatus (9), the first material being harder than the second material, wherein the method includes the step of forming the protrusions (25a) so that they have a height of about 5 µm to about 200 µm and are become embedded in the upper surface of the safety apparatus (9) when the edge of the battery housing is deformed.

14. A method according to claim 13, wherein the step of forming the protrusions (25a) on the lower surface of the first cap part (3) includes the step of forming serrations on said surface.

15. The method as claimed in claim 14, wherein forming the first cap part (3) includes media blasting the lower surface to form the protrusions (25a).

16. The method as claimed in claim 14 or 15, wherein forming the first cap part (3) includes molding the protrusions (25a) into the first cap part (3).

17. The method as claimed in any of claims 13 to 16, wherein deforming the edge of the battery housing presses the protrusions (25a) against the safety apparatus (9).

## Patentansprüche

1. Batteriekappenanordnung, die ein oberes Kappenteil (3) und eine darunter liegende Sicherheitsvorrichtung (9) umfasst, wobei Vorsprünge (25a) auf einer unteren Fläche des oberen Kappenteils (3) konfiguriert sind, in die obere Fläche der Sicherheitsvorrichtung (9) einzugreifen, wenn die Batteriekappenanordnung in eine Öffnung eines Batteriegehäuses platziert wird und ein Rand des Batteriegehäuses deformiert ist, um die Batteriekappenanordnung im Batteriegehäuse zurückzuhalten, wobei eine Härte der Vorsprünge (25a) größer als eine Härte einer Gegenfläche der Sicherheitsvorrichtung (9), **dadurch gekennzeichnet, dass**, die Vorsprünge (25a) eine Höhe von ca. 5 µm bis ca. 200 µm haben und in die obere Fläche der Sicherheitsvorrichtung (9) eingebettet werden, wenn der Rand des Batteriegehäuses deformiert wird.

2. Batteriekappenanordnung nach Anspruch 1, wobei die Vorsprünge (25a) Zacken auf der Oberfläche des ersten Kappenteils (3a) sind.

3. Batteriekappenanordnung, wie in Anspruch 1 beansprucht, wobei die Vorsprünge (25a) Medien gestrahlt sind.

4. Batteriekappenanordnung, wie in Anspruch 1 oder Anspruch 2 beansprucht, wobei die Vorsprünge (25a) in einem vorgegebenen Muster angeordnet sind.

5. Batteriekappenanordnung nach Anspruch 1 oder Anspruch 2, wobei die Vorsprünge (25a) zusammen mit dem ersten Kappenteil (3) geformt sind.

6. Batteriekappenanordnung, wie in einem beliebigen vorangehenden Anspruch beansprucht, wobei die Vorsprünge (25a) zumindest einen aus plattiertem Stahl, Edelstahl und Nickel umfassen.

7. Batteriekappenanordnung, wie in einem beliebigen vorangehenden Anspruch beansprucht, wobei die Gegenfläche der Sicherheitsvorrichtung (9) zumindest eine aus Aluminium und Aluminiumlegierung umfasst.

8. Batteriekappenanordnung, wie in einem beliebigen vorangehenden Anspruch beansprucht, wobei das erste Kappenteil (3) und die Sicherheitsvorrichtung (9) verschweißt sind.

9. Batteriekappenanordnung, wie in einem beliebigen vorangehenden Anspruch beansprucht, wobei die Sicherheitsvorrichtung (9) eine Sicherheitseinrichtung (5) umfasst, die konfiguriert ist, durch einen Batterieinnendruck transformiert zu werden, der einen vorgegebenen Druck überschreitet, wobei die Sicherheitseinrichtung (5) einen mittigen Vorsprung (8) einschließt, der aus einer unteren Fläche der Sicherheitseinrichtung hervorsteht; und eine Stromerfassungseinheit (6), die durch die Transformation der Sicherheitseinrichtung (5) arbeitet, wobei die Vorsprünge (25a) eine Fläche der Sicherheitseinrichtung kontaktieren.

10. Batteriekappenanordnung, wie in Anspruch 9 beansprucht, wobei die Sicherheitseinrichtung (5) konfiguriert ist, Batterieinnendruck von einer unteren Fläche der Sicherheitseinrichtung (5) auf eine obere Fläche der Sicherheitseinrichtung (5) zu entlasten, wenn der besagte Batterieinnendruck den vorgegebenen Druck überschreitet.

11. Batterie, welche die Batteriekappenanordnung nach einem beliebigen vorangehenden Anspruch und ein Batteriegehäuse umfasst, das einen Hohlraum definiert und eine Öffnung aufweist, eine Elektrodenanordnung (1), die innerhalb des Hohlraums angeordnet ist, wobei die Batteriekappenanordnung in der Öffnung bereitgestellt ist und elektrisch mit einer Elektrode der Elektrodenanordnung (1) gekoppelt ist, wobei die Sicherheitsvorrichtung (9) das erste Kappenteil (3) elektrisch an die Elektrode koppelt.

12. Batterie, wie in Anspruch 11 beansprucht, wobei die Batterie eine aufladbare Batterie ist.

13. Verfahren zur Herstellung einer Batterie, das Formen eines oberen Kappenteils (3) zusammen mit Vorsprüngen (25a) auf einer unteren Fläche davon, Platzieren des oberen Kappenteils (3) und einer darunter liegenden Sicherheitsvorrichtung (9) in einer Öffnung eines Gehäuses der Batterie umfasst; und Deformieren eines Randes des Batteriegehäuses angrenzend an die Öffnung, um das erste Kappenteil (3) und die Sicherheitsvorrichtung (9) in der Öffnung zurückzuhalten, wobei die Vorsprüngen (25a) auf der unteren Fläche des oberen Kappenteils (3) in Eingriff mit einer oberen Fläche der Sicherheitsvorrichtung (9) stehen, wobei das Verfahren den Schritt der Auswahl eines ersten Materials für die Vorsprünge im oberen Kappenteil (3) und eines zweiten Materials für die obere Fläche der Sicherheitsvorrichtung (9) einschließt, wobei das erste Material härter als das zweite Material ist, wobei das Verfahren den Schritt des Formens der Vorsprünge (25a) derartig einschließt, dass sie eine Höhe von ca. 5 µm bis ca. 200 µm haben und in die obere Fläche der Sicherheitsvorrichtung (9) eingebettet werden, wenn der Rand des Batteriegehäuses deformiert wird.

14. Verfahren nach Anspruch 13, wobei der Schritt des Formens der Vorsprünge (25a) auf der unteren Fläche des ersten Kappenteils (3) den Schritt des Formens von Zacken auf der besagten Oberfläche einschließt.

15. Verfahren, wie in Anspruch 14 beansprucht, wobei das Formen des ersten Kappenteils (3) Strahlen der unteren Fläche mittels Medien einschließt, um die Vorsprünge (25a) zu formen.

16. Verfahren, wie in Anspruch 14 oder 15 beansprucht, wobei das Formen des ersten Kappenteils (3) das Formen der Vorsprünge (25a) in das erste Kappenteil (3) einschließt.

17. Verfahren, wie in einem beliebigen der Ansprüche 13 bis 16 beansprucht, wobei das Deformieren des Randes des Batteriegehäuses die Vorsprünge (25a) gegen die Sicherheitsvorrichtung (9) drückt.

## Revendications

1. Ensemble bouchon de pile, comprenant une partie supérieure du bouchon (3) et un appareil de sécurité sous-jacent (9), des saillies (25a) sur une surface inférieure de la partie supérieure du bouchon (3) configurées de façon à s'engager avec la surface supérieure de l'appareil de sécurité (9) lorsque l'ensemble bouchon de pile est placé dans une ouverture d'un boîtier de pile et qu'un bord du boîtier de la pile est déformé de façon à retenir l'ensemble bouchon de pile dans le boîtier de la pile, dans lequel une dureté des saillies (25a) est plus grande qu'une dureté d'une surface opposée de l'appareil de sécurité (9), **caractérisé en ce que** les saillies (25a) ont une hauteur située entre environ 5 µm et 200 µm et sont encastrées dans la surface supérieure de l'appareil de sécurité (9) lorsque le bord du boîtier de la pile est déformé.

2. Ensemble bouchon de pile selon la revendication 1, dans lequel les saillies (25a) sont des dentelures sur la surface de la première partie du bouchon (3a).

3. Ensemble bouchon de pile selon la revendication 1, dans lequel les saillies (25a) sont des saillies texturées par projection d'abrasif.

4. Ensemble bouchon de pile selon la revendication 1 ou la revendication 2, dans lequel les saillies (25a) sont disposées dans une configuration prédéterminée.

5. Ensemble bouchon de pile selon la revendication 1 ou la revendication 2, dans lequel les saillies (25a) sont moulées avec la première partie du bouchon (3).

6. Ensemble bouchon de pile selon l'une quelconque des revendications précédentes, dans lequel les saillies (25a) comportent au moins soit de l'acier plaqué, soit de l'acier inoxydable, soit du nickel.

7. Ensemble bouchon de pile selon l'une quelconque des revendications précédentes, dans lequel la surface opposée de l'appareil de sécurité (9) comporte au moins soit de l'aluminium, soit un alliage d'aluminium.

8. Ensemble bouchon de pile selon l'une quelconque des revendications précédentes, dans lequel la première partie du bouchon (3) et l'appareil de sécurité (9) sont soudés ensemble.

9. Ensemble bouchon de pile selon l'une quelconque des revendications précédentes, dans lequel l'appareil de sécurité (9) comporte un dispositif de sécurité (5) qui est configuré de façon à être transformé par une pression interne de la pile qui dépasse une pression prédéterminée, ce dispositif de sécurité (5) comportant une saillie centrale (8) qui s'avance depuis une surface inférieure du dispositif de sécurité ; et une unité d'interception de courant (6) qui est actionnée par la transformation du dispositif de sécurité (5), les saillies (25a) entrant en contact avec une surface du dispositif de sécurité.

10. Ensemble bouchon de pile selon la revendication 9, dans lequel le dispositif de sécurité (5) est configuré de façon à relâcher la pression interne de la pile d'une surface inférieure du dispositif de sécurité (5) à une surface supérieure du dispositif de sécurité (5) lorsque ladite pression interne de la pile dépasse la pression prédéterminée.

11. Pile comportant l'ensemble bouchon de pile selon l'une quelconque des revendications précédentes et un boîtier de pile définissant une cavité et ayant une ouverture, un ensemble électrodes (1) disposé à l'intérieur de la cavité, l'ensemble bouchon de pile étant prévu dans l'ouverture et étant couplé électriquement avec une électrode dans l'ensemble électrodes (1), le dispositif de sécurité (9) couplant électriquement la première partie du bouchon (3) à l'électrode.

12. Pile selon la revendication 11, cette pile étant une pile rechargeable.

13. Procédé de fabrication d'une pile, comprenant la formation d'une partie supérieure de bouchon (3) avec des saillies (25a) sur une surface inférieure de celle-ci, la mise en place de la partie supérieure du bouchon (3) et d'un appareil de sécurité sous-jacent (9) dans une ouverture d'un boîtier d'une pile ; et la déformation d'un bord du boîtier de la pile adjacent à l'ouverture afin de retenir la première partie du bouchon (3) et l'appareil de sécurité (9) dans l'ouverture avec les saillies (25a) sur la surface inférieure de la partie supérieure du bouchon (3) en engagement avec une surface supérieure de l'appareil de sécurité (9), ce procédé comprenant l'étape consistant à sélectionner un premier matériau pour les saillies dans la partie supérieure du bouchon (3) et un deuxième matériau pour la surface supérieure de l'appareil de sécurité (9), ce premier matériau étant plus dur que le deuxième matériau, ce procédé comprenant l'étape consistant à former les saillies (25a) de manière à ce qu'elles aient une hauteur située entre environ 5 µm et 200 µm et soient devenues encastrées dans la surface supérieure de l'appareil de sécurité (9) lorsque le bord du boîtier de la pile est déformé.

14. Procédé selon la revendication 13, dans lequel l'étape de formation des saillies (25a) sur la surface inférieure de la première partie du bouchon (3) comprend l'étape de formation de dentelures sur ladite surface.

15. Procédé selon la revendication 14, dans lequel la formation de la première partie du bouchon (3) comprend la texturation par projection d'abrasif sur la surface inférieure pour former les saillies (25a).

16. Procédé selon la revendication 14 ou 15, dans lequel la formation de la première partie du bouchon (3) comprend le moulage des saillies (25a) dans la première partie du bouchon (3).

17. Procédé selon l'une quelconque des revendications 13 à 16, dans lequel la déformation du bord du boîtier de la pile presse les saillies (25a) contre l'appareil de sécurité (9).
